# EUROPEAN PATENT APPLICATION

(11) **EP 4 742 693 A1**
(43) Date of publication of application: **13.05.2026**
(21) Application number: 23959253.8
(22) Date of filing: 24.11.2023
(51) Int. Cl.: H04N 23/741, H04N 25/57

(54) **METHOD FOR SWITCHING BETWEEN HIGH DYNAMIC RANGE MODES AND ELECTRONIC DEVICE STORAGE MEDIUM**

(71) Applicant: Honor Device Co., Ltd., Shenzhen, Guangdong 518040 (CN)
(72) Inventor: WANG, Ning, Shenzhen, Guangdong 518040 (CN); LIU, Hu, Shenzhen, Guangdong 518040 (CN); ZHANG, Wenhong, Shenzhen, Guangdong 518040 (CN); YE, Ling, Shenzhen, Guangdong 518040 (CN)
(74) Representative: Goddar, Heinz J.
(86) International application number: PCT/CN2023/133944
(87) International publication number: WO 2025/107283

(57) **Abstract**

A method for switching a high dynamic range mode, an electronic device, and a storage medium are provided, and relate to the field of terminal technologies. The method is applied to an electronic device supporting a lateral overflow integration capacitor LOFIC high dynamic range HDR mode and a dual analog gain DAG HDR mode, and includes: starting a camera running program; obtaining an illumination intensity of an environment in which the electronic device is located; and enabling the LOFIC HDR mode. According to this solution, when the illumination intensity decreases, instead of remaining the LOFIC HDR mode, the HDR mode is switched to the DAG HDR mode. A feature that both a long frame and a short frame in the DAG HDR mode use a same conversion gain is used. This can relieve a signal-to-noise ratio dip in a transition region of a bright part and a dark part, and improve photographing experience of a user.

## Description

### TECHNICAL FIELD

This application relates to the field of terminal technologies, and in particular, to a method for switching a high dynamic range mode, an electronic device, and a storage medium.

### BACKGROUND

With development of a terminal industry, many electronic devices support a high dynamic range (high dynamic range, HDR) photography technology. A huge dynamic range in the real world can be captured and displayed by using the HDR photography technology when a dynamic range available in a typical imaging sensor and display device is limited.

A lateral overflow integration capacitor (lateral overflow integration capacitor, LOFIC) HDR mode is an HDR mode in which a dynamic range of a complementary metal oxide semiconductor (complementary metal oxide semiconductor, CMOS) is extended by increasing a lateral overflow capacitor. However, when an electronic device uses the LOFIC HDR mode, in a preview process or a video recording process, a signal-to-noise ratio (signal-to-noise Ratio, SNR) dips from high to low in a transition region of a bright part and a dark part of a picture, which is manifested as a layered signal-to-noise ratio, reducing photographing experience of a user.

### SUMMARY

In view of this, this application provides a method for switching a high dynamic range mode, an electronic device, and a storage medium, to relieve a signal-to-noise ratio dip in a transition region of a bright part and a dark part, thereby improving photographing experience of a user.

According to a first aspect, this application provides a method for switching a high dynamic range mode, applied to an electronic device supporting a LOFIC HDR mode and a dual analog gain (dual analog gain, DAG) HDR mode. The method includes: starting a camera running program, obtaining an illumination intensity of an environment in which the electronic device is located, enabling the LOFIC HDR mode, and switching the HDR mode to the DAG HDR mode when the illumination intensity decreases to be less than a first illumination intensity.

When a camera photosensitive element (sensor) works in the LOFIC HDR mode, in an existing solution, when an illumination intensity decreases, the LOFIC HDR mode is continuously used. In this case, to ensure picture quality at low brightness, in the LOFIC HDR mode, an exposure gain of a long frame gradually increases, causing a signal-to-noise ratio dip in a transition region of a bright part and a dark part to be gradually apparent. In the solution of this application, instead of remaining the LOFIC HDR mode, the HDR mode is switched to the DAG HDR mode. According to this solution, a feature that both a long frame and a short frame in the DAG HDR mode use a same conversion gain is used. When the illumination intensity decreases to be less than the first illumination intensity, it indicates that the illumination intensity is low. In this case, a signal-to-noise ratio dip in the LOFIC HDR mode is apparent. However, after the DAG HDR mode is used, there is no apparent signal-to-noise ratio dip between the long frame and the short frame in the DAG HDR mode, so that a signal-to-noise ratio dip in a transition region of a bright part and a dark part of an image obtained after the long frame and the short frame are fused is fully relieved, thereby improving photographing experience of a user.

In a possible implementation, when the illumination intensity is greater than or equal to the first illumination intensity, the method further includes: when the illumination intensity decreases, controlling an exposure gain in the LOFIC HDR mode to increase as the illumination intensity decreases, and controlling an exposure ratio in the LOFIC HDR mode to decrease as the illumination intensity decreases.

In an existing solution, when the illumination intensity decreases, to ensure picture quality at low brightness, an exposure gain of a long frame in the LOFIC HDR mode gradually increases, causing an exposure ratio in the LOFIC HDR mode to increase. In the solution of this embodiment of this application, when the exposure gain in the LOFIC HDR mode increases to ensure the picture quality, the exposure ratio in the LOFIC HDR mode is controlled to decrease as the illumination intensity decreases, so that the exposure ratio in the LOFIC HDR mode is not excessively high before the DAG HDR mode is switched to. Benefits of this are as follows: Before the DAG HDR mode is switched to, an apparent signal-to-noise ratio dip has already occurred in a picture due to an excessively large exposure ratio. In addition, because a pixel circuit in the DAG HDR mode generally does not include a lateral overflow integration capacitor, this may cause a maximum exposure ratio in the DAG HDR mode to be less than a maximum exposure ratio in the LOFIC HDR mode. A sudden change in an exposure ratio during switching of the HDR mode can be reduced or eliminated by reducing the exposure ratio in the LOFIC HDR mode, so that the switching of the HDR mode is more natural.

In a possible implementation, the exposure gain includes an analog gain and a digital gain, and the controlling an exposure gain in the LOFIC HDR mode to increase as the illumination intensity decreases, and the controlling an exposure ratio in the LOFIC HDR mode to decrease as the illumination intensity decreases specifically includes:

controlling a digital gain in the LOFIC HDR mode to remain unchanged; and controlling an increase rate at which an analog gain of a short frame in the LOFIC HDR mode increases as the illumination intensity decreases to be greater than an increase rate at which an analog gain of a long frame in the LOFIC HDR mode increases as the illumination intensity decreases.

An exposure ratio is a ratio of an exposure gain of a long frame to an exposure gain of a short frame. When a digital gain remains unchanged, and an analog gain increase rate of the short frame is greater than an analog gain increase rate of the long frame, the exposure ratio gradually decreases. In this implementation, an analog gain in the LOFIC HDR mode increases to ensure picture quality, and a signal-to-noise ratio dip is not exacerbated. In a possible implementation, the switching the HDR mode to the DAG HDR mode when the illumination intensity is less than a first illumination intensity specifically includes:
determining, based on the illumination intensity, the analog gain of the short frame in the LOFIC HDR mode and the analog gain of the short frame in the LOFIC HDR mode; and switching the HDR mode to the DAG HDR mode when the analog gain of the long frame is greater than a first preset gain, where the first preset gain is an analog gain of the short frame in the LOFIC HDR mode when the illumination intensity is the first illumination intensity; and controlling an exposure ratio to remain unchanged before and after switching of the HDR mode.

In this implementation, the exposure ratio is controlled to remain unchanged before and after the switching of the HDR mode, so that the switching of the HDR mode is more natural, and picture consistency is high.

In a possible implementation, the exposure gain includes an analog gain and a digital gain, and the controlling an exposure gain in the LOFIC HDR mode to increase as the illumination intensity decreases, and the controlling an exposure ratio in the LOFIC HDR mode to decrease as the illumination intensity decreases specifically includes:
controlling an analog gain of a long frame in the LOFIC HDR mode to remain unchanged;
controlling an analog gain of a short frame in the LOFIC HDR mode to increase as the illumination intensity decreases; and
controlling a digital gain in the LOFIC HDR mode to increase as the illumination intensity decreases.

In this implementation, picture quality in a low-illuminance environment is ensured by increasing the digital gain, and in this solution, because the analog gain of the long frame remains unchanged, in the LOFIC HDR mode, a signal-to-noise ratio dip in a transition region of a bright part and a dark part of a picture is significantly relieved.

In a possible implementation, the switching the HDR mode to the DAG HDR mode when the illumination intensity is less than a first illumination intensity specifically includes:
determining, based on the illumination intensity, the analog gain of the short frame in the LOFIC HDR mode and the digital gain in the LOFIC HDR mode; switching the HDR mode to the DAG HDR mode when the digital gain in the LOFIC HDR mode is greater than a second preset gain, where the second preset gain is a digital gain in the LOFIC HDR mode when the illumination intensity is the first illumination intensity; and controlling an exposure ratio to remain unchanged before and after switching of the HDR mode.

In this implementation, as the illuminance decreases, the digital gain increases. When the digital gain is large, a signal-to-noise ratio of an entire image decreases. When the digital gain is greater than the second preset gain corresponding to the first illumination intensity, the switching of the HDR mode is performed to ensure that the signal-to-noise ratio of the entire image is high. In addition, the exposure ratio is controlled to remain unchanged before and after the switching of the HDR mode, so that the switching of the HDR mode is more natural, and picture consistency is high.

In a possible implementation, the exposure gain includes an analog gain and a digital gain, and the controlling an exposure gain in the LOFIC HDR mode to increase as the illumination intensity decreases, and the controlling an exposure ratio in the LOFIC HDR mode to decrease as the illumination intensity decreases specifically includes:
controlling a digital gain in the LOFIC HDR mode to remain unchanged, and controlling an increase rate at which an analog gain of a short frame in the LOFIC HDR mode increases as the illumination intensity decreases to be greater than an increase rate at which an analog gain of a long frame in the LOFIC HDR mode increases as the illumination intensity decreases; and
when the analog gain of the long frame in the LOFIC HDR mode is greater than a third preset gain, controlling the analog gain of the long frame in the LOFIC HDR mode to remain unchanged, the analog gain of the short frame in the LOFIC HDR mode to increase as the illumination intensity decreases, and the digital gain in the LOFIC HDR mode to increase as the illumination intensity decreases.

In this solution, when the illumination intensity gradually decreases, two exposure gain adjustment processes are sequentially performed. In a first exposure gain adjustment process, the digital gain in the LOFIC HDR mode remains unchanged, and an analog gain increase rate of the long frame in the LOFIC HDR mode is less than an analog gain increase rate of the short frame in the LOFIC HDR mode. In a second exposure gain adjustment process, the digital gain in the LOFIC HDR mode and the analog gain of the short frame in the LOFIC HDR mode increase, and the analog gain of the long frame in the LOFIC HDR mode remains unchanged.

By using the foregoing two adjustment processes, before switching of the HDR mode, an SNR dip in a transition region of a picture can be relieved, and a large decrease in a signal-to-noise ratio of a dark part of the picture can be avoided. After the switching of the HDR mode, a problem of an SNR dip is relieved, and a sudden change in an exposure ratio is avoided, so that the switching of the HDR mode is natural. In a possible implementation, the switching the HDR mode to the DAG HDR mode when the illumination intensity is less than a first illumination intensity specifically includes:
determining, based on the illumination intensity, the analog gain of the short frame in the LOFIC HDR mode and the digital gain in the LOFIC HDR mode; switching the HDR mode to the DAG HDR mode when the digital gain in the LOFIC HDR mode is greater than a fourth preset gain, where the fourth preset gain is a digital gain in the LOFIC HDR mode when the illumination intensity is the first illumination intensity; and controlling an exposure ratio to remain unchanged before and after switching of the HDR mode.

In this implementation, when the digital gain is large, a signal-to-noise ratio of an entire image decreases. Therefore, when the digital gain is greater than the fourth preset gain corresponding to the first illumination intensity, the switching of the HDR mode is performed to ensure that the signal-to-noise ratio of the entire image is high. In addition, the exposure ratio is controlled to remain unchanged before and after the switching of the HDR mode, so that the switching of the HDR mode is more natural, and picture consistency is high.

In a possible implementation, the controlling an exposure ratio to remain unchanged before and after switching of the HDR mode specifically includes:
when a maximum exposure ratio corresponding to current exposure time is less than the exposure ratio before the switching of the HDR mode, reducing the exposure time, and increasing an analog gain of a long frame in the DAG HDR mode, to control the exposure ratio to remain unchanged before and after the switching of the HDR mode, where the exposure time is negatively correlated with the maximum exposure ratio corresponding to the exposure time.

When the maximum exposure ratio in the current exposure time is less than the exposure ratio before the switching of the HDR mode, the exposure time may be reduced and the analog gain of the long frame increases to adjust the exposure ratio, so that when the exposure ratio in the DAG HDR mode is adjusted, an image brightness difference before and after switching of a mode can be reduced.

In a possible implementation, the method further includes:
controlling picture brightness to be consistent before and after the switching of the HDR mode.

The picture brightness is controlled to be consistent before and after the switching of the HDR mode, so that the switching of the HDR mode is more natural, thereby further improving picture consistency.

In a possible implementation, the controlling picture brightness to be consistent before and after the switching of the HDR mode specifically includes:
controlling a product of exposure time before the switching of the HDR mode and an exposure gain of the long frame in the LOFIC HDR mode to be equal to a product of exposure time after the switching of the HDR mode and an exposure gain of the long frame in the DAG HDR mode.

The product of the exposure gain of the long frame and the exposure time is an exposure amount corresponding to the long frame. An exposure amount of the long frame is controlled to remain unchanged before and after switching of a mode, thereby improving picture brightness consistency before and after the switching of the mode.

According to a second aspect, this application further provides an electronic device. The electronic device supports a LOFIC HDR mode and a DAG HDR mode. The electronic device includes a processor and a memory, the memory is configured to store a program, and when the program is executed by the processor, the method for switching a high dynamic range mode according to the first aspect and any one of the implementations of the first aspect is performed. The electronic device may be a mobile phone, a notebook computer, a wearable electronic device (such as a smart watch and smart glasses) a tablet computer, an augmented reality (augmented reality, AR) device, a virtual reality (virtual reality, VR) device, or the like.

According to a third aspect, this application further provides a storage medium. The storage medium stores a computer program. When the computer program is executed by an electronic device, the method for switching a high dynamic range mode according to the first aspect and any one of the implementations of the first aspect is performed.

It should be understood that descriptions of technical features, technical solutions, beneficial effects or similar expressions in this application do not imply that all features and advantages can be achieved in any single embodiment. On the contrary, it can be understood that descriptions of features or beneficial effects mean that specific technical features, technical solutions, or beneficial effects are included in at least one embodiment. Therefore, the descriptions of the technical features, the technical solutions, or the beneficial effects in the specification do not necessarily mean a same embodiment. Further, the technical features, technical solutions, and beneficial effects described in this embodiment may be combined in any suitable manner. A person skilled in the art understands that embodiments can be implemented without one or more particular technical features, technical solutions, or beneficial effects of a particular embodiment. In another embodiment, additional technical features and beneficial effects may be further identified in a specific embodiment that does not reflect all the embodiments.

### BRIEF DESCRIPTION OF DRAWINGS

FIG. 1 is a schematic diagram of a pixel circuit according to an embodiment of this application;
FIG. 2 is a schematic diagram of curves of image signal-to-noise ratios that are obtained by capacitors with different conversion gains and that vary with illumination according to an embodiment of this application;
FIG. 3 is a schematic diagram of a first scenario according to an embodiment of this application;
FIG. 4 is a flowchart of a method for switching a high dynamic range mode according to an embodiment of this application;
FIG. 5 is a flowchart of another method for switching a high dynamic range mode according to an embodiment of this application;
FIG. 6 is a flowchart of still another method for switching a high dynamic range mode according to an embodiment of this application;
FIG. 7 is a schematic diagram of an electronic device according to an embodiment of this application; and
FIG. 8 is an architecture diagram of a software system of an electronic device according to an embodiment of this application.

### DESCRIPTION OF EMBODIMENTS

The terms "first" and "second" mentioned below are merely used for a purpose of descriptions and shall not be construed as indication or implication of relative importance or implicit indication of a quantity of indicated technical features. Therefore, a feature limited by "first" or "second" may explicitly or implicitly include one or more of the features. In descriptions of embodiments, unless otherwise stated, "a plurality of" means two or more.

To make a person skilled in the art understand the solutions in this application better, the following first describes an inventive concept of the technical solution in this application. An electronic device in embodiments of this application may be an electronic device such as a mobile phone, a tablet computer, and a personal digital assistant (personal digital assistant, PDA). A specific form of the electronic device is not specially limited in embodiments of this application.

A dynamic range (dynamic range, DR), also referred to as an exposure range, refers to a range of an illumination intensity captured by a camera, and for an image signal, is a ratio of a maximum value to a minimum value of a variable optical signal. Currently, many electronic devices support a HDR photography technology. A huge dynamic range in the real world can be captured and displayed by using the HDR photography technology when a dynamic range available in a typical imaging sensor and display device is limited.

Currently, an HDR mode of the electronic device may be a stagger exposure HDR (stagger exposure HDR, SHDR) mode, a LOFIC HDR mode, a dual conversion gain (dual conversion gain, DCG) mode, a dual analog gain (dual analog gain, DAG) mode, or the like.

The following describes an implementation in which the electronic device uses the LOFIC HDR mode.

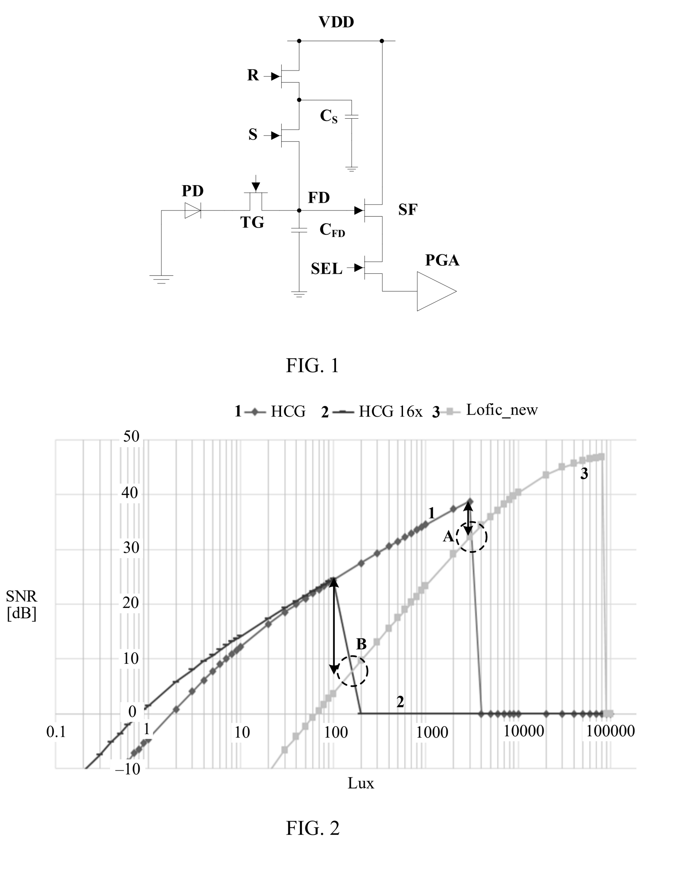

FIG. 1 is a schematic diagram of a pixel circuit according to an embodiment of this application.

A large-capacity well capacitor Cₛ is added to a pixel circuit used in a LOFIC HDR mode. Capacity of Cₛ is greater than that of an well capacitor C_{FD}. During practical application, the capacity of Cₛ is generally several dozen times that of C_{FD}.

Before exposure starts, a switch TG, a switch R, and a switch S are connected, to reset Cₛ and C_{FD}.

In this case, reset noise N2 is stored in Cₛ and C_{FD}.

During an integration period, a signal charge is integrated at a photodiode (photodiode, PD) until saturation is reached, and then an overflow charge is transferred to Cₛ and C_{FD} through the switch TG. That is, the overflow charge is integrated at Cₛ and C_{FD}, so that the overflow charge from the PD can be used for a signal.

After the integration, Cₛ and C_{FD} are isolated by disconnecting the switch S, and a charge of each C_{FD} is allocated, so that a voltage of an FD point can be read out as a signal N1. Then, the signal charge is transferred from the PD to the FD by connecting the switch TG, and the signal charge transferred from the PD to the FD is read out as a signal S1+N1.

The switch S is connected, so that all signal charges integrated at the PD, Cₛ, and C_{FD} are mixed at Cₛ and C_{FD}, and then read out as a signal S2+N2.

Cₛ and C_{FD} are reset by connecting the switch TG and a switch R. Then, after switches R and T are disconnected, next reset noise N2' is read.

In conclusion, the N1, the S1+N1, the S2+N2, and the N2' are read out in each pixel circuit, to obtain a high-sensitivity signal S1 and a high-well-capacity signal S2. Signals S1 and S2 both have a linear response to incident light. It can be learned from a working principle of the foregoing pixel circuit that an output signal-to-noise ratio of a response of C_{FD} is higher in a scenario with weak illumination, but it is easy for C_{FD} to be saturated. This corresponds to a high-voltage conversion gain (high conversion gain, HCG). A feature of Cₛ is that in the scenario with weak illumination, an output signal-to-noise ratio is low, but in a scenario with stronger illumination, it is not easy for Cₛ to reach a saturation state, and more highlight information can be recorded. This corresponds to a low-voltage conversion gain (low conversion gain, LCG). For ease of distinguishing, the voltage conversion gain is represented by a LOFIC in the following descriptions.

After Cₛ is added to the pixel circuit in the LOFIC HDR mode, a CMOS has two capacitors with different conversion gains. The two capacitors may implement voltage conversion of different magnification factors. Signal outputs of two kinds of different brightness are obtained based on different voltage conversion gains. A dynamic range of a final image may be expanded by fusing two images, so that a current dynamic range of the CMOS increases from 60 dB to approximately 90 dB.

For an information table of the LOFIC HDR mode, refer to the following Table 1.

**Table 1: Information table of a LOFIC HDR mode**

| HDR mode | Long-frame type | Short-frame type | Quantity of exposures | Quantity of output frames |
|---|---|---|---|---|
| LOFIC HDR | HCG (AG 1) | LOFIC (AG 2) | 1 | 2 |

Different analog gains AG 1 and AG 2 are provided by a programmable gain amplifier (programmable gain amplifier, PGA).

FIG. 2 is a schematic diagram of curves of image signal-to-noise ratios that are obtained by capacitors with different conversion gains and that vary with illumination according to an embodiment of this application.

A curve 1 and a curve 2 are curves of relationships between signal-to-noise ratios and illumination intensities when a long frame is read.

A curve 3 is a curve of a relationship between a signal-to-noise ratio and an illumination intensity when a short frame is read.

The curve 1 and the curve 2 in the figure correspond to different high-voltage conversion gains, and a high-voltage conversion gain corresponding to the curve 2 is 16 times that of the curve 1.

When the illumination intensity is high, a needed high-voltage conversion gain is low. In this case, a gain factor of the curve 1 is used.

There is an intersection point A between the curve 1 and the curve 3. After the LOFIC HDR mode is enabled, on a left side of the intersection point A, a value of a signal-to-noise ratio is determined based on the curve 1, and on a right side of the intersection point A, a value of a signal-to-noise ratio is determined based on the curve 3.

An actual meaning of the intersection A is a transition region of a dark part and a bright part. In a possible implementation, a short frame is used for the point A. Because a signal-to-noise ratio of the short frame is apparently lower than that of a long frame, a problem of a layered signal-to-noise ratio occurs in the transition region. In other words, in FIG. 2, it may be found that a signal-to-noise ratio dips from high to low near the transition region (which may also be referred to as a fusion location). This phenomenon may be referred to as an SNR dip. An extent of the SNR dip depends on a location of an intersection point of two curves. When the SNR dip exceeds a specific value, there is an apparent problem of inconsistent noise in a fusion image.

When an ambient illumination intensity decreases, a needed high-voltage conversion gain is high. In this case, a gain factor of the curve 2 is used. In this case, there is an intersection point B between the curve 2 and the curve 3. After the LOFIC HDR mode is enabled, on a left side of the intersection point B, a value of a signal-to-noise ratio is determined based on the curve 2, and on a right side of the intersection point B, a value of a signal-to-noise ratio is determined based on the curve 3. It may be determined from FIG. 2 that, after a voltage conversion gain increases, a curve saturation point of an HCG decreases, so that the intersection point B between the curve 2 and the curve 3 moves left relative to the intersection point A. In this case, the SNR dip apparently increases, and the problem of inconsistent noise in the transition region is more apparent. When an electronic device is used for previewing and shooting a video, a manifestation is that in a dark-light scenario, a problem of an apparent SNR dip occurs when the mode is used. Descriptions are provided below with reference to a specific scenario.

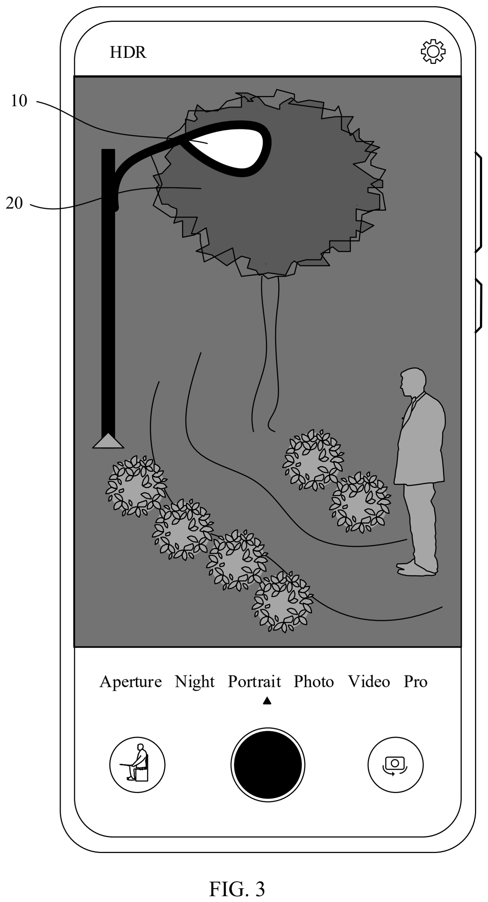

FIG. 3 is a schematic diagram of a first scenario according to an embodiment of this application.

When a user photographs at night, a bright part 10 and a dark part 20 exist in a preview picture or a photographed picture. The bright part 10 may be, for example, a luminous streetlight, and the dark part 20 may be an object that does not emit light, such as a tree. As described in the foregoing descriptions, by using a current LOFIC HDR mode, a problem of an apparent SNR dip occurs in a transition region of the bright part 10 and the dark part 20, and a visual manifestation is an increase in noise points in a transition region of a picture. In addition, when ambient light is dark, the noise point is more apparent. For example, a noise point in the late night is more apparent than a noise point in the evening. Therefore, photographing experience of the user is reduced.

Based on the foregoing analysis process, at present, the problem of an SNR dip caused by the LOFIC HDR mode needs to be relieved when an illumination intensity is dark. This application provides a method for switching a high dynamic range mode, an electronic device, and a storage medium, so that when an illumination intensity decreases, an exposure ratio in a LOFIC HDR mode can gradually decrease until the LOFIC HDR mode is switched to a DAG HDR mode. In this solution, a feature of the dual analog gain (dual analog gain, DAG) HDR mode is used, so that a problem of an SNR dip when the illumination intensity is dark is significantly relieved. In addition, because the exposure ratio in the LOFIC HDR mode gradually decreases before switching, a sudden change in the exposure ratio is relieved during the switching, that is, picture consistency before and after switching of an HDR mode is high, thereby improving photographing experience of a user.

The following first describes the DAG HDR mode. For an information table of the DAG HDR mode, refer to the following table 2.

**Table 2: Information table of a LOFIC HDR mode**

| HDR mode | Long-frame type | Short-frame type | Quantity of exposures | Quantity of output frames |
|---|---|---|---|---|
| DAG HDR | HCG (AG 1) | HCG (AG 2) | 1 | 2 |
| LOFIC HDR | HCG (AG 1) | LOFIC (AG 2) | 1 | 2 |

In the DAG HDR mode, an exposure is performed and reading is performed twice. Images of two frames, a long frame and a short frame, in the DAG HDR mode are obtained based on a same high conversion gain (HCG), and different analog gains (analog gains) are respectively used for the two frames, that is, the long frame and the short frame. One of the gains is a high analog gain (high analog gain, HAG) for processing, and the other of the gains is a low analog gain (low analog gain, LAG) for processing. A camera photosensitive element (sensor) inputs two frames of images that has undergone HAG and LAG processing to an image processing module of a chip platform, and generates a frame of image that has undergone algorithm processing. Because conversion gains of the long frame and the short frame generated in the DAG HDR mode are the same, there is no problem of an apparent SNR dip. In the solution of this application, a working status of the sensor is switched from the LOFIC HDR mode to the DAG mode through switching of a mode, to relieve the problem of an SNR dip.

In this embodiment of this application, to relieve the problem of an SNR dip as much as possible, the following aspects need to be met.
1. In the LOFIC HDR mode, as the illumination intensity decreases, an analog gain of the long frame cannot be excessively large, or an apparent SNR dip occurs in the transition region. Therefore, an exposure ratio needs to be properly controlled.
2. Because a pixel circuit in the DAG HDR mode generally does not include Cₛ, this may cause a maximum exposure ratio in the DAG HDR mode to be less than a maximum exposure ratio in the LOFIC HDR mode. When the LOFIC HDR mode is switched to the DAG HDR mode, an analog gain of a long frame in the DAG HDR mode needs to be sufficiently large, to avoid an occurrence of a sudden change in an exposure ratio in the DAG HDR mode in comparison with an exposure ratio in the LOFIC HDR mode. A minimum analog gain of the short frame in the DAG HDR mode is 1. Therefore, a maximum exposure ratio depends on the analog gain of the long frame in the DAG HDR mode.
3. There is no sudden change in image brightness before and after switching of a mode.

The technical solutions provided in embodiments of this application are described in detail below.

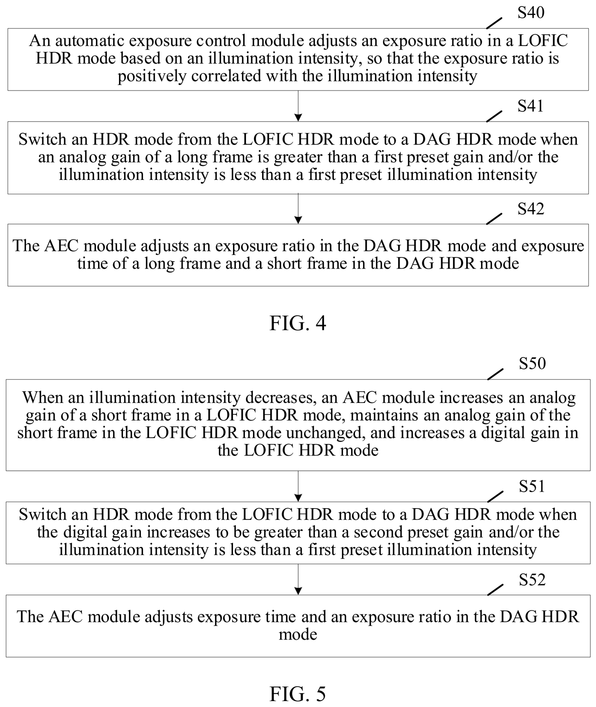

FIG. 4 is a flowchart of a method for switching a high dynamic range mode according to an embodiment of this application.

The method includes the following steps.

S40: An automatic exposure control module adjusts an exposure ratio in a LOFIC HDR mode based on an illumination intensity, so that the exposure ratio is positively correlated with the illumination intensity.

The automatic exposure control (Automatic Exposure Control, AEC) module determines a dynamic range of a current scene. The AEC module can implement illumination intensity measurement, scene analysis, and exposure compensation, which are separately described below.

The dynamic range is also referred to as an exposure range, and refers to a range of illumination intensity captured by a camera.

An illumination intensity measurement process is a process of obtaining illumination information of a current environment by using exposure information of an image.

The scene analysis refers processing performed to obtain a special condition of current illumination, for example, a scene in which whether backlight illumination, front bright light, or the like exists. Analysis of the information can improve usability of a sensor, and can greatly improve image quality. This is the most key technology in automatic exposure.

After the illumination intensity measurement and the scene analysis are completed, the AEC module may adjust a corresponding parameter to make exposure adjustment effective, which is mainly implemented by setting exposure time and an exposure gain.

In same exposure time, an exposure ratio is a ratio of an exposure gain of a long frame to an exposure gain of a short frame. The exposure gain includes an analog gain and a digital gain of an image signal processor (Image Signal Processor, ISP) for a digital image signal after the image signal processor converts an electrical signal into the digital image signal. When the digital gain remains unchanged, a ratio of an analog gain of the long frame to an analog gain of the short frame is equal to the exposure ratio. After an electronic device enables an HDR mode, and an ambient illumination intensity decreases, sensitivity of a photosensitive element to light may be improved by improving an exposure gain.

In this embodiment of this application, when the AEC module adjusts the exposure ratio in the LOFIC HDR mode based on the illumination intensity, the exposure ratio is positively correlated with the illumination intensity, that is, when the illumination intensity has a decreasing trend, the exposure ratio also has a decreasing trend.

In a possible implementation, the illumination intensity is represented by illuminance, and a unit of the illuminance is lux (lux).

In the technical solution of this embodiment of this application, in an HDR environment, when the illumination intensity decreases, to ensure imaging quality, the AEC module increases both the analog gain of the long frame and the analog gain of the short frame, and enables an analog gain increase rate of the short frame to be greater than an analog gain increase rate of the long frame, thereby gradually reducing the exposure ratio. For a specific example, refer to the following Table 3.

**Table 3: First variation table of a gain and an exposure ratio**

| | | | | | | | |
|---|---|---|---|---|---|---|---|
| Exposure time | 20 ms | 20 ms | 20 ms | 20 ms | 20 ms | Model switching | 10 ms (DAG) |
| Sensor gain (LOFIC) | 1 | 2.2 | 4.8 | 8 | 12 | | 1 (HCG) |
| Sensor gain (HCG) | 1 | 2 | 4 | 6 | 8 | | 16 (HCG) |
| Exposure ratio | 24 | 22 | 20 | 18 | 16 | | 16 |

Each row of data in Table 3 is, sequentially from top to bottom, exposure time, an analog exposure gain of a short frame, an analog exposure gain of a long frame, and an exposure ratio.

Data in Table 3 is, sequentially from left to right, a change status of each piece of data when the illumination intensity gradually decreases in the HDR environment.

An example in which in the LOFIC HDR mode, a well capacity of a circuit when a short frame is read is 24 times that of the circuit when a long frame is read is used. It may be determined based on Table 3 that the analog gain increase rate of the short frame is faster, so that the exposure ratio decreases as the illumination intensity decreases.

S41: Switch an HDR mode from the LOFIC HDR mode to a DAG HDR mode when the analog gain of the long frame is greater than a first preset gain and/or the illumination intensity is less than a first preset illumination intensity.

In this embodiment of this application, when an SNR dip occurring in a transition region of a bright part and a dark part of a picture is severe, switching of the HDR mode needs to be performed. Whether to perform the switching of the HDR mode may be determined based on a value of the analog gain of the long frame and/or a value of the illumination intensity. Details are described below.

In a possible implementation, whether to perform the switching from the LOFIC HDR mode to the DAG HDR mode is determined based on the value of the analog gain of the long frame. The analog gain of the long frame gradually increases as the illumination intensity decreases. The HDR mode is switched from the LOFIC HDR mode to the DAG HDR mode when the analog gain of the long frame increases to be greater than the first preset gain. The first preset gain is not specifically limited in this embodiment of this application. During actual application, the first preset gain may be pre-configured based on a specific photographing capability of a camera of the electronic device. In Table 3, an example in which the first preset gain is 8 is used. When the analog gain of the long frame is greater than 8, switching of an HDR mode is performed. A process in which the analog gain of the long frame gradually increases may correspond to a process in which the curve 1 is gradually converted to the curve 2 in FIG. 2, and the SNR dip gradually becomes severe.

In another possible implementation, whether to perform the switching from the LOFIC HDR mode to the DAG HDR mode is determined based on the value of the illumination intensity. The analog gain of the long frame gradually increases as the illumination intensity decreases. The HDR mode is switched from the LOFIC HDR mode to the DAG HDR mode when it is determined that the illumination intensity at this time is less than the first preset illumination intensity. The first preset illumination intensity is not specifically limited in this embodiment of this application. During actual application, the first preset illumination intensity may be pre-configured based on the specific photographing capability of the camera of the electronic device.

In still another possible implementation, switching of a mode may be determined based on the value of the analog gain of the long frame or the value of the illumination intensity. When it is determined, based on one of the value of the analog gain of the long frame or the value of the illumination intensity, that the switching of the mode needs to be performed, the switching of the mode is performed. For example, when the analog gain of the long frame is greater than the first preset gain, but an illumination intensity determining result is not generated, it may be determined that the switching of the mode is to be performed. For another example, when it is determined that the illumination intensity is less than the first preset illumination intensity, but a determining result of the analog gain is not generated, it may be determined that the switching of the mode is to be performed. This implementation uses a condition that is obtained first as a criterion, which has a fast reaction speed, and has high sensitivity for the switching of the mode.

In still yet another possible implementation, the switching of the mode may be determined based on the value of the analog gain of the long frame and the value of the illumination intensity. The HDR mode is switched from the LOFIC HDR mode to the DAG HDR mode when the analog gain is greater than the first preset gain and the illumination intensity is less than the first preset illumination intensity. This implementation for determining is more accurate.

The electronic device stores the first preset gain and the corresponding first preset illumination intensity, and performs calling when the first preset gain and the corresponding first preset illumination intensity are to be used.

S42: The AEC module adjusts an exposure ratio in the DAG HDR mode and exposure time in the DAG HDR mode.

To enable the switching of the HDR mode to be smooth, picture brightness and an exposure ratio need to remain unchanged before and after the switching of the HDR mode.

Specifically, the AEC module uses, when the exposure ratio in the DAG HDR mode is different from the exposure ratio in the LOFIC HDR mode, the exposure ratio in the LOFIC HDR mode when the switching of the HDR mode is performed as an exposure ratio in the DAG HDR mode after the switching of the HDR mode, and determines, based on the exposure ratio, analog gains respectively corresponding to a long frame and a short frame in the DAG HDR mode. In addition, when a maximum exposure ratio in current exposure time is less than the exposure ratio before the switching of the HDR mode, the exposure ratio may be adjusted by reducing the exposure time and increasing the analog gain of the long frame.

Before the switching of the mode, if the analog gain of the short frame is 12, the analog gain of the long frame is 8, and the well capacity of a circuit when the short frame is read is 24 times that of the circuit when the long frame is read, an exposure ratio R1 is 16.

After the switching of the mode is performed, to maximize a change range of the exposure ratio in the DAG HDR mode, and fully exercise performance of the DAG HDR mode, the analog gain of the short frame may be selected to be a small value. In this embodiment of this application, an example in which the analog gain of the short frame is a minimum value of 1 is used. In this case, to enable the exposure ratio to remain unchanged, an analog gain of the long frame in the DAG HDR mode is configured to be 16.

To remain consistent image brightness before and after the switching of the mode, the exposure time may be shortened, that is, the image brightness is reduced by shortening the exposure time from 20 ms to 10 ms.

Longer exposure time indicates a larger sum of photons reaching a charge coupled device (charge coupled device, CCD) or a complementary metal-oxide-semiconductor (complementary metal-oxide-semiconductor, CMOS) phototransistor and a brighter captured image.

In this embodiment of this application, when the digital gain remains unchanged, a value of a product of the exposure time and the analog gain of the long frame remains unchanged before and after the switching of the mode. The data corresponding to Table 3 is used for description, before the switching of the mode, a value of a product of the exposure time and the analog gain of the long frame is 20*8=160, and after the switching of the mode, a value of a product of the exposure time and the analog gain of the long frame is 10*16=160, so that the picture brightness remains unchanged before and after the switching of the mode.

It may be understood that during actual application, the AEC module may further enable a difference between exposure ratios before and after the switching of the mode to be within a first preset range, and enable a difference between picture brightness before and after the switching of the mode to be within a second preset range. In other words, a small difference is allowed between the exposure ratios before and after the switching of the HDR mode and the picture brightness before and after the switching of the HDR mode, to reduce adjustment difficulty and improve an adjustment speed.

In conclusion, in the technical solution provided in this embodiment of this application, when the illumination intensity gradually decreases, the analog gain of the long frame and the analog gain of the short frame that are in the LOFIC HDR mode increase, the analog gain increase rate of the short frame is faster, and the exposure ratio decreases. The HDR mode is switched from the LOFIC HDR mode to the DAG HDR mode when the analog gain of the long frame is greater than the first preset gain and/or the illumination intensity is less than the first preset illumination intensity. A problem of an SNR dip is relieved through the switching of the HDR mode. In this case, because the exposure ratio is already adjusted down in advance, and an exposure ratio in the LOFIC HDR mode during the switching of the mode is not greater than a maximum exposure ratio in the DAG HDR mode, the exposure ratio before the switching of the mode can be used in the DAG HDR mode. Therefore, a sudden change in the exposure ratio is avoided, so that the switching of the HDR mode is natural. In addition, the exposure time is adjusted, so that there is no sudden change in the picture brightness before and after the switching of the HDR mode, and the switching of the HDR mode is more natural. Therefore, in this solution, photographing experience of a user can be improved.

In the foregoing embodiment, an implementation in which analog gains of two frames of images are separately adjusted before the two frames of images in the HDR mode are fused is described. The following describes an implementation in which the two frames of images in the HDR mode are first fused, and then a digital gain of an ISP is adjusted to implement natural switching of the HDR mode.

FIG. 5 is a flowchart of another method for switching a high dynamic range mode according to an embodiment of this application.

The method includes the following steps.

S50: When an illumination intensity decreases, an AEC module increases an analog gain of a short frame in a LOFIC HDR mode, maintains the analog gain of the short frame in the LOFIC HDR mode unchanged, and increases a digital gain in the LOFIC HDR mode.

The digital gain in the LOFIC HDR mode refers to a gain of an image signal processor (ISP) for a digital image signal after two frames in the LOFIC HDR mode are fused into one frame, and the image signal processor converts an electrical signal into the digital image signal.

The automatic exposure control module determines a dynamic range of a current scene. The AEC module can implement illumination intensity measurement, scene analysis, and exposure compensation.

The automatic exposure control module adjusts an exposure ratio in the LOFIC HDR mode based on the illumination intensity, so that the exposure ratio is positively correlated with the illumination intensity. In other words, when the illumination intensity decreases, the exposure ratio decreases. In a possible implementation, the illumination intensity is represented by illuminance, and a unit of the illuminance is lux (lux).

In the technical solution of this embodiment of this application, in an HDR environment, when the illumination intensity gradually decreases, to ensure imaging quality, the AEC module gradually increases the analog gain of the short frame in the LOFIC HDR mode, and maintains the analog gain of the short frame in the LOFIC HDR mode unchanged, so that the exposure ratio gradually decreases. For a specific example, refer to the following Table 4.

**Table 4: Second variation table of a gain and an exposure ratio**

| | | | | | | | |
|---|---|---|---|---|---|---|---|
| Exposure time | 20 ms | 20 ms | 20 ms | 20 ms | 20 ms | Model switching | 10 ms (DAG) |
| Sensor gain*ISP gain (LOFIC) | 1*1 | 1.1*2 | 1.2*4 | 1.3*6 | 1.5*8 | | 1 (HCG) |
| Sensor gain*ISP gain (HCG) | 1*1 | 1*2 | 1*4 | 1*6 | 1*8 | | 16 (HCG) |
| Exposure ratio | 24 | 22 | 20 | 18 | 16 | | 16 |

Each row of data in Table 4 is, sequentially from top to bottom, exposure time, a product of an analog exposure gain of a short frame and a digital exposure gain of the short frame, a product of an analog exposure gain of a long frame and a digital exposure gain of a long frame, and an exposure ratio.

Data in Table 4 is, sequentially from left to right, a change status of each piece of data when the illumination intensity gradually decreases in the HDR environment.

An example in which in the LOFIC HDR mode, a well capacity of a circuit when a short frame is read is 24 times that of the circuit when a long frame is read is used. It may be determined based on Table 4 that an analog gain (that is, Sensor gain) increase rate of the short frame is faster, so that the exposure ratio decreases as the illumination intensity decreases.

After two frames of images are fused, analog gains of the two frames of images cannot be separately adjusted. Therefore, digital gains of the long frame and the short frame in Table 4 are the same. The digital gain also increases as the illumination intensity decreases.

S51: Switch an HDR mode from the LOFIC HDR mode to a DAG HDR mode when the digital gain increases to be greater than a second preset gain and/or the illumination intensity is less than a second preset illumination intensity.

In the technical solution of this application, the two frames of images are fused first, and then the digital gain increases. The digital gain acts on a digital signal. An increase in the digital gain causes a decrease in a signal-to-noise ratio of an entire image. Therefore, when the signal-to-noise ratio of the entire image decreases to a specific extent, switching of the HDR mode needs to be performed. Whether to perform the switching of the HDR mode may be determined based on a value of the digital gain and a value of the illumination intensity. Details are described below.

In a possible implementation, whether to perform the switching from the LOFIC HDR mode to the DAG HDR mode is determined based on the value of the digital gain. As the illumination intensity decreases, to ensure picture quality, the digital gain gradually increases, causing a decrease in the signal-to-noise ratio of the entire image. When the digital gain increases to be greater than the second preset gain, it is considered that the decrease in the signal-to-noise ratio of the entire image caused by the digital gain is large, and the switching of the HDR mode needs to be performed. The second preset gain is not specifically limited in this embodiment of this application. During actual application, the second preset gain may be pre-configured based on a specific photographing capability of a camera of an electronic device. In Table 4, an example in which the second preset gain is 8 is used.

In another possible implementation, whether to perform the switching from the LOFIC HDR mode to the DAG HDR mode is determined based on the value of the illumination intensity. In this case, as the illumination intensity decreases, the digital gain correspondingly increases. When the illumination intensity decreases to be less than the second preset illumination intensity, it is considered that the signal-to-noise ratio of the entire image caused by the digital gain decreases is large, and the switching of the HDR mode needs to be performed. The second preset illumination intensity is not specifically limited in this embodiment of this application. During actual application, the second preset illumination intensity may be pre-configured based on the specific photographing capability of the camera of the electronic device.

In still another possible implementation, when it is determined that a gain is greater than the second preset gain or the illumination intensity is less than the second preset illumination intensity, switching of a mode is performed. A switching condition that is obtained first is used as a criterion, which has a fast reaction speed, and has high sensitivity for the switching of the mode.

In still yet another possible implementation, the HDR mode is switched from the LOFIC HDR mode to the DAG HDR mode when the digital gain increases to be greater than the second preset gain and the illumination intensity is less than the second preset illumination intensity. This implementation for determining is more accurate.

S52: The AEC module adjusts exposure time and an exposure ratio in the DAG HDR mode.

To enable the switching of the HDR mode to be smooth, picture brightness and an exposure ratio need to remain unchanged before and after the switching of the HDR mode.

Specifically, the AEC module uses, when the exposure ratio in the DAG HDR mode is different from the exposure ratio in the LOFIC HDR mode, the exposure ratio in the LOFIC HDR mode when the switching of the HDR mode is performed as an exposure ratio in the DAG HDR mode after the switching of the HDR mode, and determines, based on the exposure ratio, analog gains respectively corresponding to a long frame and a short frame in the DAG HDR mode. In addition, when a maximum exposure ratio in current exposure time is less than the exposure ratio before the switching of the HDR mode, the exposure ratio may be adjusted by reducing the exposure time and increasing the analog gain of the long frame. For example, a maximum analog gain of a long frame corresponding to 20 ms is 8, that is, a corresponding maximum exposure ratio is 8, and is less than 16. The exposure time is adjusted to 10 ms, so that a larger exposure ratio can be used.

Before the switching of the mode, the analog gain of the long frame remains unchanged, and the analog gain of the long frame in Table 4 remains at 1. The analog gain of the short frame gradually increases, so that an exposure ratio before the switching of the mode decreases.

After the switching of the mode is performed, to maximize a change range of the exposure ratio in the DAG HDR mode, and fully exercise performance of the DAG HDR mode, the analog gain of the short frame may be selected to be a small value. In this embodiment of this application, an example in which the analog gain of the short frame is a minimum value of 1 is used. In this case, to enable the exposure ratio to remain unchanged, an analog gain of the long frame in the DAG HDR mode is configured to be 16. To remain consistent image brightness before and after the switching of the mode, the exposure time needs to be shortened, that is, the image brightness is reduced by shortening the exposure time from 20 ms to 10 ms.

In this embodiment of this application, the analog gain of the long frame remains unchanged, and a value of a product of the exposure time and an exposure gain in the LOFIC HDR mode is maintained to be equal to a value of a product of the exposure time in the DAG HDR mode and the exposure gain of the long frame in the DAG HDR mode after the switching of the mode, so that the picture brightness remains unchanged before and after the switching of the mode.

The data corresponding to Table 4 is used for description, before the switching of the mode, a value of a product of exposure time and an exposure gain is 20*1*8=160.

After the switching of the mode, a digital gain in the DAG HDR mode is configured to be 1 by default. In this case, a value of a product of exposure time and an exposure gain of a long frame is 10*16*1=160.

It may be understood that, during actual application, the AEC module may further enable a difference between exposure ratios before and after the switching of the mode to be within a first preset range, and enable a difference between picture brightness before and after the switching of the mode to be within a second preset range. In other words, a small difference is allowed between the exposure ratios before and after the switching of the HDR mode and the picture brightness before and after the switching of the HDR mode, to reduce adjustment difficulty and improve an adjustment speed.

In conclusion, in the technical solution provided in this embodiment of this application, when the illumination intensity gradually decreases, the analog gain of the long frame in the LOFIC HDR mode remains unchanged, and the exposure gain of the short frame in the LOFIC HDR mode increases, so that the exposure ratio decreases, and the digital gain in the LOFIC HDR mode increases. The HDR mode is switched from the LOFIC HDR mode to the DAG HDR mode when the digital gain increases to be greater than the second preset gain and/or the illumination intensity is less than the second preset illumination intensity. A problem of an SNR dip is relieved through the switching of the HDR mode. In this case, because the exposure ratio is already adjusted down in advance, a sudden change in the exposure ratio is avoided, so that the switching of the HDR mode is natural. In addition, the exposure time is adjusted, so that there is no sudden change in the picture brightness before and after the switching of the HDR mode, and the switching of the HDR mode is more natural. Therefore, in this solution, photographing experience of a user can be improved.

The foregoing embodiment describes an implementation in which the two frames of images in the HDR mode are first fused, and then the digital gain of the ISP is adjusted to implement natural switching of the HDR mode. The following describes an implementation in which before the two frames of images in the HDR mode are fused, the analog gains of the two frames of images are separately adjusted, and after the two frames of images in the HDR mode are fused, the digital gain of the ISP is adjusted to implement the natural switching of the HDR mode.

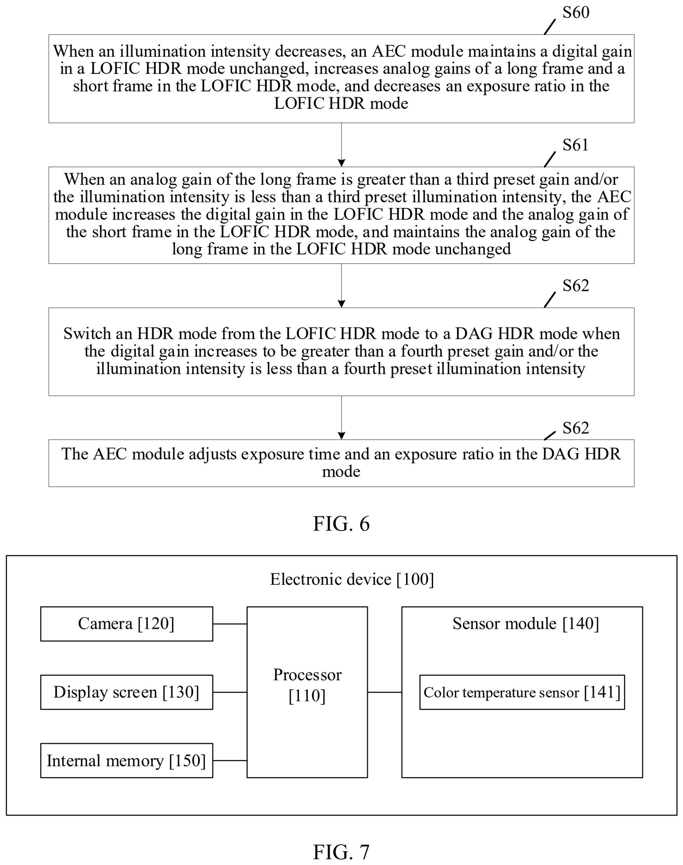

FIG. 6 is a flowchart of still another method for switching a high dynamic range mode according to an embodiment of this application.

The method includes the following steps.

S60: When an illumination intensity decreases, an AEC module maintains a digital gain in a LOFIC HDR mode unchanged, increases analog gains of a long frame and a short frame in the LOFIC HDR mode, and decreases an exposure ratio in the LOFIC HDR mode.

In the LOFIC HDR mode, there are two exposure gain adjustment processes. In a first exposure gain adjustment process, the digital gain in the LOFIC HDR mode remains unchanged, the analog gains of the long frame and the short frame in the LOFIC HDR mode increase, and the exposure ratio in the LOFIC HDR mode decreases.

When the AEC module adjusts the exposure ratio in the LOFIC HDR mode based on the illumination intensity, the exposure ratio is positively correlated with the illumination intensity, that is, when the illumination intensity has a decreasing trend, the exposure ratio also has a decreasing trend.

In a possible implementation, an analog gain increase rate of a short frame is greater than an analog gain increase rate of a long frame, so that an exposure ratio can gradually decrease. For a specific example, refer to the following Table 5.

**Table 5: Third variation table of a gain and an exposure ratio**

| | | | | | | | |
|---|---|---|---|---|---|---|---|
| Exposure time | 20 ms | 20 ms | 20 ms | 20 ms | 20 ms | Model switching | 10 ms (DAG) |
| Sensor gain*ISP gain (LOFIC) | 1*1 | 2.2*1 | 4.8*1 | 5.3*1.5 | 6*2 | | 1 (HCG) |
| Sensor gain*ISP gain (HCG) | 1*1 | 2*1 | 4*1 | 4*1.5 | 4*2 | | 16 (HCG) |
| Exposure ratio | 24 | 22 | 20 | 18 | 16 | | 16 |

Each row of data in Table 5 is sequentially, from top to bottom, exposure time, a product of an analog exposure gain of a short frame and a digital exposure gain of the short frame, a product of an analog exposure gain of a long frame and a digital exposure gain of a long frame, and an exposure ratio.

Data in Table 5 is, sequentially from left to right, a change status of each piece of data when the illumination intensity gradually decreases in an HDR environment.

An example in which in the LOFIC HDR mode, a well capacity of a circuit when a short frame is read is 24 times that of the circuit when a long frame is read is used. It may be determined based on Table 5 that, in the first exposure gain adjustment process, the digital gain is maintained at 1, and the analog gain increase rate of the short frame is greater than the analog gain increase rate of the long frame, so that the exposure ratio can gradually decrease.

S61: When an analog gain of the long frame is greater than a third preset gain and/or the illumination intensity is less than a third preset illumination intensity, the AEC module increases the digital gain in the LOFIC HDR mode and the analog gain of the short frame in the LOFIC HDR mode, and maintains the analog gain of the long frame in the LOFIC HDR mode unchanged.

In this embodiment of this application, when an SNR dip occurring in a transition region of a bright part and a dark part of a picture is large, the first exposure gain adjustment process is ended and a second exposure gain adjustment process is started. Whether to end the first exposure gain adjustment process may be determined based on a value of the analog gain of the long frame and/or a value of the illumination intensity.

In a possible implementation, whether to end the first exposure gain adjustment process is determined based on the value of the analog gain of the long frame. The third preset gain is not specifically limited in this embodiment of this application. During actual application, the third preset gain may be pre-configured based on a specific photographing capability of a camera of an electronic device. In Table 5, an example in which the third preset gain is 4 is used. When the analog gain of the long frame is greater than 4, the first exposure gain adjustment process is ended, and then the analog gain of the long frame remains unchanged. A process in which the analog gain of the long frame gradually increases may correspond to a process in which the curve 1 is gradually converted to the curve 2 in FIG. 2, and the SNR dip gradually becomes severe.

In another possible implementation, whether to perform the switching from the LOFIC HDR mode to a DAG HDR mode is determined based on the value of the illumination intensity. The third preset illumination intensity is not specifically limited in this embodiment of this application. During actual application, the third preset illumination intensity may be pre-configured based on the specific photographing capability of the camera of the electronic device. The third preset illumination intensity in this embodiment of this application is an illumination intensity when the AEC module adjusts the analog gain of the long frame to 4.

In still another possible implementation, whether to end the first exposure gain adjustment process may be determined based on the value of the analog gain of the long frame or the value of the illumination intensity. This implementation uses a condition that is obtained first as a criterion, which has a relatively fast reaction speed and high sensitivity.

In still yet another possible implementation, the value of the analog gain of the long frame and the value of the illumination intensity may be used for determining. When the analog gain is greater than a first preset gain and the illumination intensity is less than a first preset illumination intensity, the first exposure gain adjustment process is ended. This implementation for determining is more accurate.

After the first exposure gain adjustment process is ended, the second exposure gain adjustment process is started. In the second exposure gain adjustment process, the AEC module increases the digital gain in the LOFIC HDR mode and the analog gain of the short frame in the LOFIC HDR mode, and maintains the analog gain of the long frame in the LOFIC HDR mode unchanged.

S62: Switch an HDR mode from the LOFIC HDR mode to the DAG HDR mode when the digital gain increases to be greater than a fourth preset gain and/or the illumination intensity is less than a fourth preset illumination intensity.

The digital gain acts on a digital signal. An increase in the digital gain causes a decrease in a signal-to-noise ratio of an entire image. Therefore, when the signal-to-noise ratio of the entire image decreases to a specific extent, switching of the HDR mode needs to be performed. Whether to perform switching of the HDR mode may be determined based on the value of the digital gain and the value of the illumination intensity. Details are described below.

In a possible implementation, whether to perform the switching from the LOFIC HDR mode to the DAG HDR mode is determined based on the value of the digital gain. As the illumination intensity decreases, to ensure picture quality, the digital gain gradually increases, causing a decrease in the signal-to-noise ratio of the entire image. When the digital gain increases to be greater than the fourth preset gain, it is considered that the decrease in the signal-to-noise ratio of the entire image caused by the digital gain is large, and the switching of the HDR mode needs to be performed. The fourth preset gain is not specifically limited in this embodiment of this application. During actual application, the fourth preset gain may be pre-configured based on the specific photographing capability of the camera of the electronic device. In Table 5, an example in which the fourth preset gain is 2 is used.

In another possible implementation, whether to perform the switching from the LOFIC HDR mode to the DAG HDR mode is determined based on the value of the illumination intensity. In this case, as the illumination intensity decreases, the digital gain correspondingly increases. When the illumination intensity decreases to be less than the fourth preset illumination intensity, it is considered that the signal-to-noise ratio of the entire image caused by the digital gain decreases is large, and the switching of the HDR mode needs to be performed. The fourth preset illumination intensity is not specifically limited in this embodiment of this application. During actual application, the fourth preset illumination intensity may be pre-configured based on the specific photographing capability of the camera of the electronic device.

In still another possible implementation, when it is determined that a gain is greater than the fourth preset gain or the illumination intensity is less than the fourth preset illumination intensity, switching of a mode is performed. A switching condition that is obtained first is used as a criterion, which has a fast reaction speed, and has high sensitivity for the switching of the mode.

In still yet another possible implementation, when the digital gain increases to be greater than the fourth preset gain and the illumination intensity is less than the fourth preset illumination intensity, the HDR mode is switched from the LOFIC HDR mode to the DAG HDR mode. This implementation for determining is more accurate.

S63: The AEC module adjusts exposure time and an exposure ratio in the DAG HDR mode.

To enable the switching of the HDR mode to be smooth, picture brightness and an exposure ratio need to remain unchanged before and after the switching of the HDR mode.

Specifically, the AEC module uses, when the exposure ratio in the DAG HDR mode is different from the exposure ratio in the LOFIC HDR mode, the exposure ratio in the LOFIC HDR mode when the switching of the HDR mode is performed as an exposure ratio in the DAG HDR mode after the switching of the HDR mode, and determines, based on the exposure ratio, analog gains respectively corresponding to a long frame and a short frame in the DAG HDR mode. In addition, when a maximum exposure ratio in current exposure time is less than the exposure ratio before the switching of the HDR mode, the exposure ratio may be adjusted by reducing the exposure time and increasing the analog gain of the long frame.

To maximize a change range of the exposure ratio in the DAG HDR mode, to fully exercise performance of the DAG HDR mode, the analog gain of the short frame may be selected to be a small value. In this embodiment of this application, an example in which the analog gain of the short frame is a minimum value of 1 is used. In this case, to enable the exposure ratio to remain unchanged, an analog gain of the long frame in the DAG HDR mode is configured to be 16. To remain consistent image brightness before and after the switching of the mode, the exposure time needs to be shortened, that is, the image brightness is reduced by shortening the exposure time from 20 ms to 10 ms.

In this embodiment of this application, a value of a product of the exposure time and an exposure gain in the LOFIC HDR mode is maintained to be equal to a value of a product of the exposure time in the DAG HDR mode and the exposure gain of the long frame in the DAG HDR mode after the switching of the mode, so that the picture brightness remains unchanged before and after the switching of the mode.

The data corresponding to Table 5 is used for description, before the switching of the mode, a value of a product of exposure time and an exposure gain is 20*4*2=160.

After the switching of the mode, a digital gain in the DAG HDR mode is configured to be 1 by default. In this case, a value of a product of exposure time and an exposure gain of a long frame is 10*16*1=160.

It may be understood that, during actual application, during actual application, the AEC module may further enable a difference between exposure ratios before and after the switching of the mode to be within a first preset range, and enable a difference between picture brightness before and after the switching of the mode to be within a second preset range. In other words, a small difference is allowed between the exposure ratios before and after the switching of the HDR mode and the picture brightness before and after the switching of the HDR mode, to reduce adjustment difficulty and improve an adjustment speed.

In conclusion, in the technical solution provided in this embodiment of this application, when the illumination intensity gradually decreases, two exposure gain adjustment processes are sequentially performed. In a first exposure gain adjustment process, the digital gain in the LOFIC HDR mode remains unchanged, and an analog gain increase rate of the long frame in the LOFIC HDR mode is less than an analog gain increase rate of the short frame in the LOFIC HDR mode. In a second exposure gain adjustment process, the digital gain in the LOFIC HDR mode and the analog gain of the short frame in the LOFIC HDR mode increase, and the analog gain of the long frame in the LOFIC HDR mode remains unchanged. By using the foregoing two adjustment processes, before switching of the HDR mode, an SNR dip in a transition region of a picture can be relieved, and a large decrease in a signal-to-noise ratio of a dark part of the picture can be avoided. After the switching of the HDR mode is performed, a problem of an SNR dip is relieved. In this case, because the exposure ratio is already adjusted down in advance, and an exposure ratio in the LOFIC HDR mode during the switching of the mode is not greater than a maximum exposure ratio in the DAG HDR mode, the exposure ratio before the switching of the mode can be used in the DAG HDR mode. Therefore, a sudden change in the exposure ratio is avoided, so that the switching of the HDR mode is natural. In addition, the exposure time is adjusted, so that there is no sudden change in the picture brightness before and after the switching of the HDR mode, and the switching of the HDR mode is more natural. Therefore, in this solution, photographing experience of a user can be improved.

Based on the method for switching a high dynamic range mode provided in the foregoing embodiments, an embodiment of this application further provides an electronic device, which is described in detail below with reference to the accompanying drawings.

The electronic device provided in this embodiment of this application may be a mobile phone, a notebook computer, a wearable electronic device (such as a smart watch or smart glasses), a tablet computer, an AR device, a VR device, or the like. An example in which the electronic device is a mobile phone is used below for description.

FIG. 7 is a schematic diagram of an electronic device according to an embodiment of this application.

The electronic device 100 includes: a processor 110, a camera 120, a display screen 130, a sensor module 140, and an internal storage region 150. The sensor module 140 may include a color temperature sensor 141 and may also include other types of sensors.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and the like.

The electronic device 100 may implement a photographing function through the image signal processor (Image Signal Processor, ISP), the camera 120, the video codec, the GPU, the display screen 130, the application processor, and the like.

The ISP is configured to process data fed back by the camera 120. For example, during photographing, a shutter is enabled, and light is transmitted to a camera photosensitive element through a lens. An optical signal is converted into an electrical signal, and the camera photosensitive element transmits the electrical signal to the ISP for processing, to convert the electrical signal into an image visible to naked eyes. The ISP may further perform algorithm optimization on noise, brightness, and a skin tone of an image. The ISP may further optimize parameters such as exposure and color temperature of a photographed scene. In some embodiments, the ISP may be disposed in the camera 120.

The camera 120 is configured to capture a static image or video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into an image signal in a standard format such as RGB and YUV. In some embodiments, the electronic device 100 may include a plurality of cameras.

The color temperature sensor 141 is configured to sense ambient color temperature and illuminance, so that the electronic device can perform automatic exposure control based on a detection result.

The internal memory 150 may be configured to store computer-executable program code, and the executable program code includes instructions. The internal memory 150 may include a program storage region and a data storage region. The program storage region may store an operating system, an application required by at least one function (such as a sound playback function and an image display function), and the like. The data storage region may store data created during use of the electronic device 100. In addition, the internal memory 150 may include a high-speed random access memory, and may further include a non-volatile memory, for example, at least one disk storage device, a flash memory device, or a universal flash storage (universal flash storage, UFS). The processor 110 runs the instructions stored in the internal memory 150 and/or the instructions stored in the memory disposed in the processor, to implement the method for switching a high dynamic range mode in the foregoing embodiments.

It can be understood that the structure illustrated in this embodiment of the present invention does not constitute a specific limitation on the electronic device 100. In some other embodiments of this application, the electronic device 100 may include more or fewer components than those shown in the figure, or some components may be combined, or some components may be split, or a different component arrangement may be used. The components shown in the figure may be implemented by using hardware, software, or a combination of software and hardware.

A software system of the electronic device is described below with reference to the accompanying drawings.

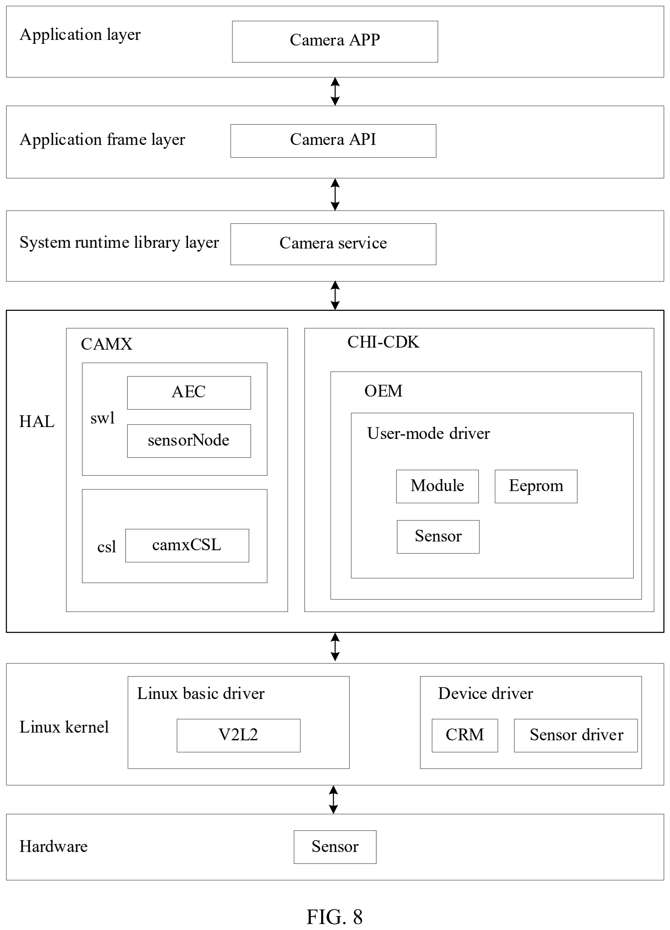

FIG. 8 is an architecture diagram of a software system of an electronic device according to an embodiment of this application.

In this embodiment of this application, an Android system with a layered architecture is used as an example to describe a software structure of the electronic device.

The layered architecture divides software into a plurality of layers, and the layers communicate with each other through software interfaces. In some embodiments, in the Android system, there are an application layer, an application framework (Framework) layer, a system runtime library layer, a hardware abstraction layer (Hardware Abstraction Layer, HAL) and a kernel (Linux Kernel) layer from top to bottom. For ease of understanding, a hardware (hardware) layer is further shown in the figure.

The application layer may include a series of application packages. An application built in a system and an application not at a system level both belong to the application layer, and are responsible for directly interacting with a user. For example, a camera APP may be included.

The application framework layer provides an application programming interface (application programming interface, API) and a programming framework for the application at the application layer. The application framework layer includes some predefined functions.

The system runtime library layer mainly includes an Android runtime library and a program library (Native C/C++ Libraries), and can provide a camera service.

The hardware abstraction layer (Hardware Abstraction Layer, HAL) is a routine package of a software layer, is an interface layer located between an operating system kernel and a hardware circuit, aims to abstract hardware, and is configured to simulate details of a specific system platform, so that a program can directly access a hardware resource.

The hardware abstraction layer includes a CAMX-CHI architecture. The architecture provides a HAL3 interface to be invoked by a camera provider, receives a request from the camera provider, implements the HAL3 interface internally, controls a camera driver layer by using a V4L2 standard framework, delivers the request to a driver part, waits for a result to be returned, and further reports the result to the camera provider.

The CAMX-CHI architecture includes two parts, namely, CAMX and a camera hardware interface (camera hardware interface, CHI)-camera development kit (camera development kit, CDK).

The CAMX is responsible for implementation of basic service code. The CAMX mainly includes a csl module for implementing interaction with a driver, and swl for implementing a software node. The swl may implement automatic exposure control (AEC), and generate a sensorNode for a sensor configuration instruction. The csl is a communication module responsible for implementing communication between the CAMX and the driver layer.

The CHI-CDK is responsible for implementing scalability and customization requirements. This helps an original equipment manufacturer (original equipment manufacturer, OEM)/original design manufacturer (original design manufacturer, ODM) to add its own extension function.

A module module in an OEM module stores configuration files of different sensors, and the configuration files need to be used when the sensor is initialized.

An eeprom module in the OEM module stores configuration information of an electrically erasable programmable read only memory (Electrically Erasable Programmable read only memory, EEPROM).

A sensor module in the OEM module stores register configuration parameters in sensor modes. For example, configuration parameters related to a LOFIC HDR mode and a DAG HDR mode can be stored.

The kernel (Linux Kernel) layer is a layer between hardware and software. The kernel layer includes at least a Linux basic driver, for example, V2L2. The kernel layer further includes a device driver, for example, a sensor driver. A camera request management (camera request management, CRM) in the figure is for managing a configuration request of a camera.

When a user opens the camera APP for preview or video recording, the electronic device may determine, based on a dynamic range of a current environment, whether to enable the HDR mode. The electronic device supports the LOFIC HDR mode and the DAG HDR mode. In addition, the electronic device may further support another HDR mode. This is not specifically limited in embodiments of this application.

Because a dynamic range to which the LOFIC HDR mode adapts is greater than that of the DAG HDR mode, the electronic device first uses the LOFIC HDR mode.

When an ambient illumination intensity gradually decreases, the LOFIC HDR mode is switched to the DAG HDR mode by using the solution in the foregoing method embodiments, thereby relieving a problem of an SNR dip. In addition, exposure time is adjusted, so that no sudden change occurs in picture brightness before and after switching of the HDR mode, and the switching of the HDR mode is more natural. Therefore, photographing experience of a user is improved by using the electronic device.

An embodiment of this application further provides a storage medium, the storage medium stores a program, and when the program is executed by a processor, the method for switching a high dynamic range mode in the foregoing embodiments is implemented.

A readable medium includes a permanent and non-permanent, and a removable and non-removable medium, and information storage can be implemented by using any method or technology. The information may be a computer-readable instruction, a data structure, a program module, or other data. Examples of the storage medium of a computer include, but are not limited to, a parameter random access memory (parameter random access memory, PRAM), a static random access memory (static random access memory, SRAM), a dynamic random access memory (dynamic random access memory, DRAM), another type of random access memory (random access memory, RAM), a read only memory (read only memory, ROM), an electrically-erasable programmable read-only memory (electrically-erasable programmable read-only memory, EEPROM), a flash memory, or another memory technology.

The foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A method for switching a high dynamic range mode, applied to an electronic device supporting a lateral overflow integration capacitor LOFIC high dynamic range HDR mode and a dual analog gain DAG HDR mode, wherein the method comprises:
starting a camera running program;
obtaining an illumination intensity of an environment in which the electronic device is located;
enabling the LOFIC HDR mode; and
switching the HDR mode to the DAG HDR mode when the illumination intensity decreases to be less than a first illumination intensity.

2. The method according to claim 1, wherein when the illumination intensity is greater than or equal to the first illumination intensity, the method further comprises:
when the illumination intensity decreases, controlling an exposure gain in the LOFIC HDR mode to increase as the illumination intensity decreases, and controlling an exposure ratio in the LOFIC HDR mode to decrease as the illumination intensity decreases.

3. The method according to claim 2, wherein the exposure gain comprises an analog gain and a digital gain, and the controlling an exposure gain in the LOFIC HDR mode to increase as the illumination intensity decreases, and controlling an exposure ratio in the LOFIC HDR mode to decrease as the illumination intensity decreases specifically comprises:
controlling a digital gain in the LOFIC HDR mode to remain unchanged; and
controlling an increase rate at which an analog gain of a short frame in the LOFIC HDR mode increases as the illumination intensity decreases to be greater than an increase rate at which an analog gain of a long frame in the LOFIC HDR mode increases as the illumination intensity decreases.

4. The method according to claim 3, wherein the switching the HDR mode to the DAG HDR mode when the illumination intensity is less than a first illumination intensity specifically comprises:
determining, based on the illumination intensity, the analog gain of the short frame in the LOFIC HDR mode and the analog gain of the long frame in the LOFIC HDR mode;
switching the HDR mode to the DAG HDR mode when the analog gain of the long frame is greater than a first preset gain, wherein the first preset gain is an analog gain of the short frame in the LOFIC HDR mode when the illumination intensity is the first illumination intensity; and
controlling an exposure ratio to remain unchanged before and after switching of the HDR mode.

5. The method according to claim 2, wherein the exposure gain comprises an analog gain and a digital gain, and the controlling an exposure gain in the LOFIC HDR mode to increase as the illumination intensity decreases, and controlling an exposure ratio in the LOFIC HDR mode to decrease as the illumination intensity decreases specifically comprises:
controlling an analog gain of a long frame in the LOFIC HDR mode to remain unchanged;
controlling an analog gain of a short frame in the LOFIC HDR mode to increase as the illumination intensity decreases; and
controlling a digital gain in the LOFIC HDR mode to increase as the illumination intensity decreases.

6. The method according to claim 5, wherein the switching the HDR mode to the DAG HDR mode when the illumination intensity is less than a first illumination intensity specifically comprises:
determining, based on the illumination intensity, the analog gain of the short frame in the LOFIC HDR mode and the digital gain in the LOFIC HDR mode;
switching the HDR mode to the DAG HDR mode when the digital gain in the LOFIC HDR mode is greater than a second preset gain, wherein the second preset gain is a digital gain in the LOFIC HDR mode when the illumination intensity is the first illumination intensity; and
controlling an exposure ratio to remain unchanged before and after switching of the HDR mode.

7. The method according to claim 2, wherein the exposure gain comprises an analog gain and a digital gain, and the controlling an exposure gain in the LOFIC HDR mode to increase as the illumination intensity decreases, and controlling an exposure ratio in the LOFIC HDR mode to decrease as the illumination intensity decreases specifically comprises:
controlling a digital gain in the LOFIC HDR mode to remain unchanged, and controlling an increase rate at which an analog gain of a short frame in the LOFIC HDR mode increases as the illumination intensity decreases to be greater than an increase rate at which an analog gain of a long frame in the LOFIC HDR mode increases as the illumination intensity decreases; and
when the analog gain of the long frame in the LOFIC HDR mode is greater than a third preset gain, controlling the analog gain of the long frame in the LOFIC HDR mode to remain unchanged, the analog gain of the short frame in the LOFIC HDR mode to increase as the illumination intensity decreases, and the digital gain in the LOFIC HDR mode to increase as the illumination intensity decreases.

8. The method according to claim 7, wherein the switching the HDR mode to the DAG HDR mode when the illumination intensity is less than a first illumination intensity specifically comprises:
determining, based on the illumination intensity, the analog gain of the short frame in the LOFIC HDR mode and the digital gain in the LOFIC HDR mode;
switching the HDR mode to the DAG HDR mode when the digital gain in the LOFIC HDR mode is greater than a fourth preset gain, wherein the fourth preset gain is a digital gain in the LOFIC HDR mode when the illumination intensity is the first illumination intensity; and
controlling an exposure ratio to remain unchanged before and after switching of the HDR mode.

9. The method according to claim 4 or 6 or 8, wherein the controlling an exposure ratio to remain unchanged before and after switching of the HDR mode specifically comprises:
when a maximum exposure ratio corresponding to current exposure time is less than the exposure ratio before the switching of the HDR mode, reducing the exposure time, and increasing an analog gain of a long frame in the DAG HDR mode, to control the exposure ratio to remain unchanged before and after the switching of the HDR mode, wherein the exposure time is negatively correlated with the maximum exposure ratio corresponding to the exposure time.

10. The method according to any one of claims 1 to 9, wherein the method further comprises:
controlling picture brightness to be consistent before and after the switching of the HDR mode.

11. The method according to claim 10, wherein the controlling picture brightness to be consistent before and after the switching of the HDR mode specifically comprises:
controlling a product of exposure time before the switching of the HDR mode and an exposure gain of the long frame in the LOFIC HDR mode to be equal to a product of exposure time after the switching of the HDR mode and an exposure gain of the long frame in the DAG HDR mode.

12. An electronic device, wherein the electronic device comprises a processor and a memory, the memory is configured to store a program, and when the program is executed by the processor, the method for switching a high dynamic range mode according to any one of claims 1 to 11 is performed.

13. A storage medium, wherein the storage medium stores a computer program, and when the computer program is executed by an electronic device, the method for switching a high dynamic range mode according to any one of claims 1 to 11 is performed.
